# EUROPEAN PATENT APPLICATION

(11) **EP 2 312 291 A1**
(43) Date of publication of application: **20.04.2011**
(21) Application number: 09806633.5
(22) Date of filing: 22.07.2009
(51) Int. Cl.: G01N 1/00, G01N 1/22, G01N 27/62

(54) **ANALYTICAL METHOD AND ANALYTICAL SYSTEM**

(30) Priority: 12.08.2008 JP 2008207786
(71) Applicant: Sumitomo Seika Chemicals CO. LTD., Hyogo 675-0145 (JP)
(72) Inventor: NAKANISHI Hideki, Kako-gun Hyogo 675-0145 (JP); UTANI Keisuke, Kako-gun Hyogo 675-0145 (JP); NISHIGUCHI Kohei, Kako-gun Hyogo 675-0145 (JP)
(74) Representative: Hering, Hartmut
(86) International application number: PCT/JP2009/063103
(87) International publication number: WO 2010/018738

(57) **Abstract**

Analytical method and analytical system are presented, wherein properties of the carrier gas conveying fine particles and gas components generated by laser ablation can be prevented from inhibiting the optimization of analysis conditions, and plural kinds of elements can be stably measured with high sensitivity and good accuracy without losing operability, speed, and convenience when fine particles generated by laser ablation are plasma-analyzed. A sample αis converted into fine particles by a laser ablation device 3 in the atmosphere of a first gas. The fine particles are conveyed from the laser ablation device 3 to a gas replacement device 5 by using the first gas as a carrier gas. The first gas of at least part of the carrier gas conveying the fine particles is replaced with a second gas by means of the gas replacement device 5. The fine particles are conveyed from the gas replacement device 5 to the plasma analyzer 6 by the carrier gas that has been subjected to the gas replacement. Constituent elements of the fine particles are analyzed by the plasma analyzer 6.

## Description

### TECHNICAL FIELD

The present invention relates to a method and a system suitable for analyzing additional trace elements and impurity trace elements in a surface of materials such as metals, semiconductors, ceramics, glass, and plastics by using a laser ablation device and a plasma analyzer in, for example, the semiconductor industry and electronic device industry.

### BACKGROUND

In, for example, Europe, the RoHS Directive prohibits materials of electronic devices or the like to contain such elements as lead, mercury, cadmium, and chromium; therefore, to verify the compliance, a sample is irradiated with a laser beam by using a laser ablation device, part of the sample is converted into fine particles (aerosol), the fine particles are introduced with a carrier gas into a plasma analyzer such as an inductively coupled plasma mass spectrometer (ICP-MS), inductively coupled plasma atomic emission spectroscope (ICP-AES), microwave induced plasma mass spectrometer (MIP-MS), or microwave induced plasma atomic emission spectroscope (MIP-AES), and additional trace elements and impurity trace elements in the materials are analyzed (see Patent Document 1 and Patent Document 2). By using such an analytical system, it is possible to analyze plural kinds of trace elements contained in the sample at the same time.

In the conventional analytical system of the above-described type, the laser ablation device and plasma analyzer are directly connected to each other, and the gas used as atmosphere during laser ablation is directly introduced as a carrier gas for fine particles into the plasma analyzer. In other words, in the conventional system using the laser ablation device and plasma analyzer, the fine particles are conveyed from the laser ablation device to the plasma analyzer without replacing the carrier gas. Further, helium gas and argon gas are known as carrier gases for use during laser ablation, and argon gas is known as a carrier gas for use during plasma analysis.

### PRIOR ART DOCUMENTS

### PATENT DOCUMENTS

Patent Document 1: Japanese Patent Application Laid-open No. 2004-325390
Patent Document 2: Japanese Patent Application Laid-open No. 2006-153660

### SUMMARY OF THE INVENTION

### PROBLEM TO BE SOLVED BY THE INVENTION

When helium gas is used as a carrier gas in laser ablation, a region heated by laser irradiation increases because thermal conductivity of helium gas is higher than that of argon gas. As a result, fine particles generated by laser ablation are reduced in size; therefore the adhesion of fine particles to the crater periphery of the sample formed by laser ablation and the inner surface of a carrier gas flow channel is inhibited, the number of fine particles conveyed to the plasma is increased and analysis sensitivity can be increased. Further, fine particles are difficult to decompose and ionize in plasma if the size of fine particles is large, and therefore the reduction in the size of fine particles makes it possible to increase the efficiency of atomization and ionization in the plasma analyzer and increase analysis sensitivity and stability of signals from plasma.
However, for the below-described reasons, argon gas is preferentially used as carrier gas during plasma analysis. To be more precise, since helium gas has an ionization voltage higher than that of argon gas, power necessary for ionization to maintain the plasma state increases, a load on the analyzer increases, and ion density in the plasma decreases. Further, if helium gas is used, the plasma becomes less stable than when argon gas is used, optimum measurement conditions during analysis are complex to select, and thus plural kinds of elements are difficult to be measured with high sensitivity, good accuracy, and high stability; therefore operability decreases, and analysis speed and convenience are lost. Thus, optimization of analysis using a laser ablation device and a plasma analyzer has been hindered by properties of carrier gas.

Further, it is possible that a gas component (e.g. a sulfur compound such as SO₂) that decreases the sensitivity of plasma analysis and hinders the measurements is generated by laser ablation due to constituent elements of the sample.

It is an object of the present invention to provide an analytical method and an analytical system that can resolve the above-described problems.

### MEANS FOR SOLVING THE OBJECT

The analytical method in accordance with the present invention is characterized in that the analytical method comprises converting a sample into fine particles by a laser ablation device in an atmosphere of a first gas; conveying the fine particles from the laser ablation device to a gas replacement device by using the first gas as a carrier gas; replacing the first gas of at least part of the carrier gas with a second gas by means of the gas replacement device; conveying the fine particles from the gas replacement device to a plasma analyzer by the carrier gas that has been subjected to the gas replacement; and analyzing constituent elements of the fine particles by the plasma analyzer.
With the analytical method in accordance with the present invention, the first gas is used as an atmosphere of the sample during laser ablation, and the fine particles can be conveyed to the plasma of the plasma analyzer by the carrier gas including the second gas with which the first gas has been replaced.
Furthermore, even if a gas component that decreases the sensitivity of plasma analysis and hinders the measurements is generated during laser ablation due to constituent elements of the sample, this gas component can be removed by the gas replacement performed by the gas replacement device.

The analytical system in accordance with the present invention is characterized in that the system comprises a first gas supply source that supplies a first gas; a laser ablation device that converts a sample into fine particles by laser ablation in an atmosphere of the first gas supplied from the first gas supply source; the laser ablation device having a first carrier gas outlet through which the first gas as a carrier gas flows out together with the fine particles; a second gas supply source that supplies a second gas; a gas replacement device having a first carrier gas inlet for introducing the first gas that flows out from the first carrier gas outlet together with the fine particles, a second gas inlet for introducing the second gas supplied from the second gas supply source, a gas replacement portion that replaces the first gas of at least part of the carrier gas with the second gas, and a second carrier gas outlet through which the carrier gas that has been subjected to the gas replacement flows out together with the fine particles; and a plasma analyzer having a second carrier gas inlet for introducing the carrier gas that flows out from the second carrier gas outlet together with the fine particles, and generating plasma for analyzing constituent elements of the fine particles introduced together with the carrier gas.
The analytical system in accordance with the present invention makes it possible to implement the method in accordance with the present invention.

In the present invention, it is preferred, for example, that the first gas is helium gas and the second gas is argon gas. Where helium gas with a comparatively high thermal conductivity is used as the first gas, fine particles produced in laser ablation are reduced in size; therefore the adhesion of fine particles to the crater periphery of the sample formed by laser ablation and the inner surface of a carrier gas flow channel is inhibited, the number of fine particles conveyed to the plasma is increased, the efficiency of atomization and ionization in the plasma analyzer is improved, and analysis sensitivity and stability of signals from the plasma can be improved. Further, where argon gas is used as the second gas, the fine particles are introduced into the plasma by a carrier gas including argon gas that has a comparatively low ionization voltage; therefore it is possible to reduce power necessary for ionization to maintain the plasma and a load on the analyzer, increase ion density in the plasma, stabilize the plasma, and facilitate the selection of optimum measurement conditions during analysis.

### EFFECTS OF THE INVENTION

According to the present invention, when fine particles produced by laser ablation are plasma analyzed, properties of the carrier gas conveying the fine particles and gas components generated by laser ablation can be prevented from inhibiting the optimization of analysis conditions, and plural kinds of elements can be stably measured with high sensitivity and good accuracy without losing operability, speed, and convenience.

### BRIEF DESCRIPTION OF THE DRAWINGS

[Fig. 1] a schematic explanatory drawing of the analytical system of an embodiment according to the present invention.
[Fig. 2] a schematic explanatory drawing of the gas replacement device of the embodiment according to the present invention.

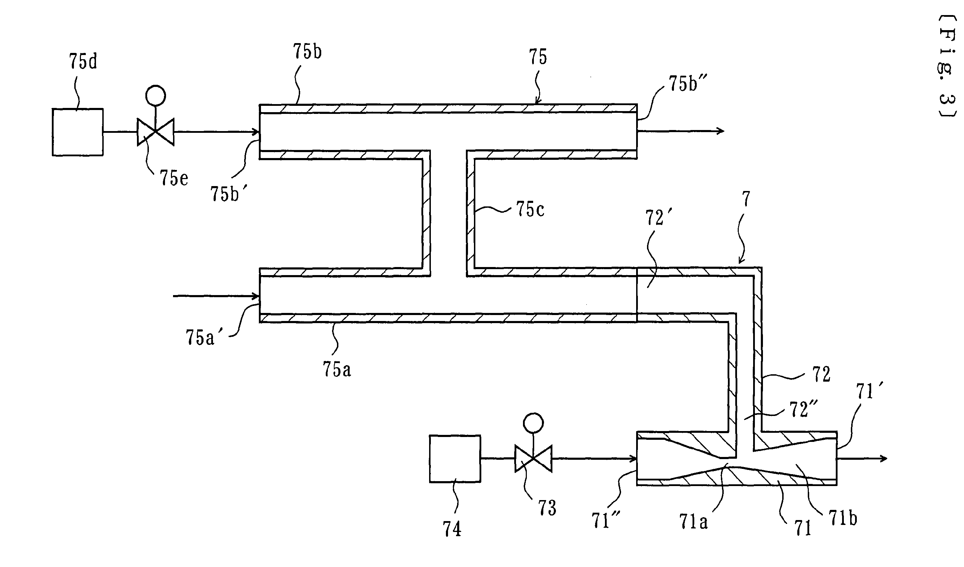

[Fig. 3] a schematic explanatory drawing of the gas addition device of the embodiment according to the present invention.
[Fig. 4] a drawing to show analysis results of constituent elements of fine particles obtained with the analytical system of a comparative example.
[Fig. 5] a drawing to show analysis results of constituent elements of fine particles obtained with the analytical system of an embodiment according to the present invention.

### EMBODIMENT FOR CARRYING OUT THE INVENTION

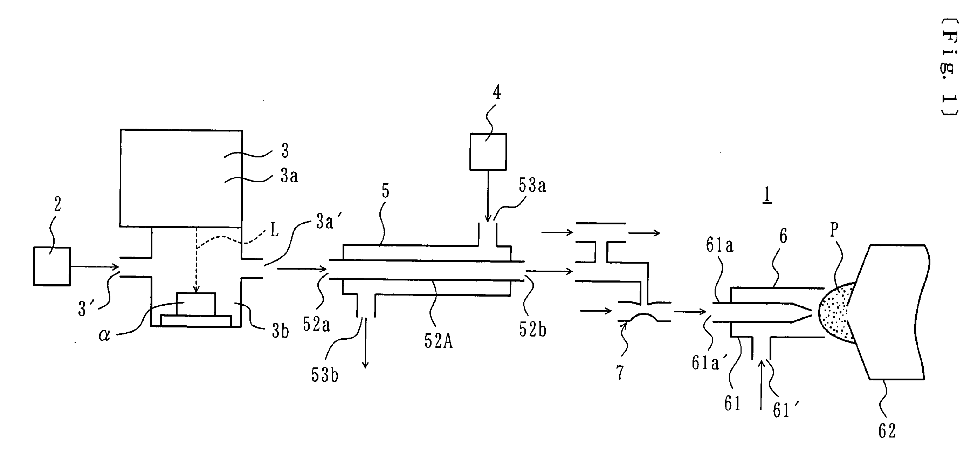

An analytical system 1 shown in Fig. 1 includes a first gas supply source 2, a laser ablation device 3, a second gas supply source 4, a gas replacement device 5, a plasma analyzer 6, and a gas addition device 7.

The first gas supply source 2 supplies helium gas as the first gas in the present embodiment and is constituted by, for example, a gas cylinder.

A known device can be used as the laser ablation device 3 having a laser beam emission unit 3a that emits a laser beam L and a sample chamber 3b that stores a sample α. The first gas is supplied from the first gas supply source 2 into the sample chamber 3b via a gas introducing port 3'. The surface of the sample α is irradiated with the laser beam L in an atmosphere of the first gas inside the sample chamber 3b. As a result, laser ablation of the sample α is performed, whereby part of the sample α is converted into fine particles. A first carrier gas outlet 3a' is formed in the sample chamber 3b so as to cause the first gas to flow out together with the fine particles produced by laser ablation from the sample chamber 3b, so that the first gas serves as a carrier gas for the fine particles.

The second gas supply source 4 supplies argon gas in the present embodiment and is constituted by, for example, a gas cylinder.

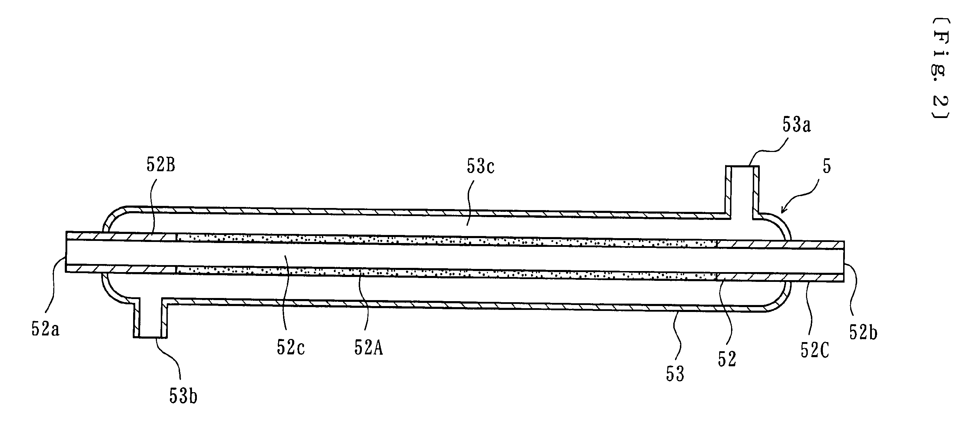

As shown in Fig. 2, a known device can be used as the gas replacement device 5 having an inner pipe 52 that is a straight pipe with a round cross section and an outer pipe 53 that is a straight pipe with a round cross section covering the inner pipe 52, in which both ends of the inner pipe 52 protrude from the outer pipe 53, and the diameter of the outer pipe 53 gradually reduces in the vicinity of both ends thereof so that the outer pipe comes in close contact with the outer periphery of the inner pipe 52.

The inner pipe 52 has a first carrier gas inlet 52a formed at one end thereof, a second carrier gas outlet 52b formed at the other end thereof, and an inner gas flow channel 52c between the first carrier gas inlet 52a and the second carrier gas outlet 52b. The first carrier gas inlet 52a is connected through a pipe (not shown in the figure) to the first carrier gas outlet 3a' of the laser ablation device 3. As a result, the first gas flowing out from the first carrier gas outlet 3a' is introduced from the first carrier gas inlet 52a into the gas replacement deice 5 together with the fine particles.

The outer pipe 53 has a second gas inlet 53a formed in the circumferential wall close to one end thereof, an off-gas outlet 53b formed in the circumferential wall close to the other end, and an outer gas flow channel 53c between the second gas inlet 53a and the off-gas outlet 53b. The first carrier gas inlet 52a, second carrier gas outlet 52b, second gas inlet 53a, and off-gas outlet 53b are disposed so that the gas flow direction in the inner gas flow channel 52c and the gas flow direction in the outer gas flow channel 53c are opposite to each other. The second gas supply source 4 is connected via a pipe (not shown in the figure) to the second gas inlet 53a. As a result, the second gas supplied from the second gas supply source 4 is introduced from the second gas inlet 53a into the gas replacement device 5.

A area between both ends of the circumferential wall covering the inner gas flow channel 52c in the inner pipe 52 is a porous partition wall 52A through which the first gas is moved to the outside of the inner gas flow channel 52c and the second gas is moved to the inside of the inner gas flow channel 52c by diffusion due to a partial pressure difference between the first gas and the second gas. The movement of the gases via the porous partition wall 52A due to a difference between the pressure in the inner gas flow channel 52c and the pressure in the outer gas flow channel 53c, in other words, a difference in pressure between the inside and the outside of the inner gas flow channel 52c, is substantially prevented by the porous partition wall 52A. As a result, the first gas as a carrier gas is introduced together with the fine particles from the first carrier gas inlet 52a into the inner pipe 52 and flows in the inner gas flow channel 52c surrounded by the porous partition wall 52A, and the second gas is introduced from the second gas inlet 53a into the outer pipe 53 and flows in the outer gas flow channel 53c surrounding the porous partition wall 52A to the direction opposite to the flow direction of the first gas, whereby gas replacement is performed.

To be more precise, by the diffusion due to a partial pressure difference between the first gas and the second gas, in other words, by using a propulsion caused by a difference in concentration between the first gas and the second gas in the inside and outside of the inner gas flow channel 52c, most of the first gas moves to the outside of the inner gas flow channel 52c via the porous partition wall 52A and also part of the second gas moves into the inner gas flow channel 52c via the porous partition wall 52A. In the inner gas flow channel 52c, the concentration of the first gas gradually decreases and the concentration of the second gas gradually increases in the direction from the first carrier gas inlet 52a to the second carrier gas outlet 52b, while in the outer gas flow channel 53c, the concentration of the second gas gradually decreases and the concentration of the first gas gradually increases in the direction from the second gas inlet 53a to the off-gas outlet 53b. As a result, the substantially entire first gas in the carrier gas can be replaced with the second gas.

Where part of the first gas inside the inner pipe 52 is not replaced with the second gas, the first gas in a very small amount that produces no effect on plasma analysis is allowed to flow out from the second carrier gas outlet 52b. By appropriately setting the pore size, porosity, thickness, diameter, length and shape of the porous partition wall 52A, inner diameter and shape of the outer pipe 4, and flow rates of the first gas and second gas, it is possible to reduce the amount of the first gas flowing out from the second carrier gas outlet 52b to below a critical amount that produces no adverse effect on analysis in the plasma analyzer 6. Thus, it is enough that a gas replacement portion constituted by the porous partition wall 52A has a function to replace the first gas of at least part of the carrier gas for fine particles with the second gas.

As a result, the porous partition wall 52A constitutes the gas replacement portion by which the first gas of at least part of the carrier gas for fine particles is replaced with the second gas. The carrier gas that has been subjected to the gas replacement so as to be mostly replaced with the second gas at the gas replacement portion flows out together with the fine particles from the second carrier gas outlet 52b of the inner pipe 52. The first gas that was the former carrier gas and the remaining second gas that has not be replaced with the first gas flow out as off-gas from the off-gas outlet 53b. In this case, the fine particles in the inner gas flow channel 52c that have diameter larger than the pore diameter of the porous partition wall 52A do not pass through the pores and are not caught in the pores, and the fine particles that have diameter equal to or less than the pore diameter have low diffusion velocity in comparison with the gas and have extremely small inertia force generated by the flow of diffusing gas; therefore most of the fine particles flow out from the second carrier gas outlet 52b without moving to the outer gas flow channel 53c. Therefore, the fine particles that have been introduced together with the first gas into the inner gas flow channel 52c can be supplied together with the second gas into the plasma analyzer 6 without loss.

The pore diameter of the porous partition wall 52A is set to prevent gas movement via the porous partition wall 52A due to a difference between the pressure in the inner gas flow channel 52c and the pressure in the outer gas flow channel 53c, and it is preferred that the pore diameter is substantially 0.8 µm to 0.001 µm. The pore diameter is set to be equal to or greater than 0.001 µm, preferably equal to or greater than 0.002 µm, more preferably equal to or greater than 0.02 µm so that the device is prevented from increasing in size due to a reduction in gas replacement efficiency; and the pore diameter is set to be equal to or less than 0.8 µm, preferably equal to or less than 0.5 µm, and more preferably equal to or less than 0.2 µm so that the analysis accuracy is prevented from decreasing with the fine particles passing through the pores or being caught in the pores and the gas is prevented from moving due to the difference in pressure. A very small number of pores in the porous partition wall 52A, which do not affect the gas replacement operation, is allowed to have a diameter outside the range of 0.8 µm to 0.001 µm as long as the pore diameter is substantially within the range of 0.8 µm to 0.001 µm. The porosity of the porous partition wall 52A is not particularly limited, but it is preferred that the porosity is 40% to 80% from the standpoint of gas replacement efficiency and mechanical strength.

The material of the porous partition wall 52A is not particularly limited, provided it satisfies the above-described conditions, glass such as quartz glass and ceramics are preferred, for example, shirasu porous glass (SPG) can be used. Areas 52B, 52C close to both ends of the inner pipe 52 have inner and outer diameters equal to those of the porous partition wall 52A and are fitly joined thereto. The entire circumferential wall covering the inner gas flow channel 52c is allowed to serve as the porous partition wall 52A, or it is enough that an area thereof covering at least part of the inner gas flow channel 52c serves as the porous partition wall 52A. The materials of the areas 52B, 52C close to both ends of the inner pipe 52 and the outer pipe 53 are not particularly limited, and a plurality of different materials can be selected, and from the standpoint of processability, heat resistance, and easiness of heating the first gas introduced into the inner pipe 52, for example, metals, ceramics, and glass are preferred, and ceramics or glass such as quartz glass is desirable.

If necessary, the gas replacement device 5 can be provided with a heating means (not shown in the figure). The heating means is not particularly limited, for example, it can be constituted by a band-like heater wound around the outer pipe 53 or an infrared ray lamp disposed on the circumference of the outer pipe 53, in this case, a temperature sensor for controlling the temperature inside the inner and outer pipes 52, 53 and a temperature control device that controls the heating means according to the detected temperature can be provided.

The plasma analyzer 6 can be a well-known one, in the present embodiment, it is an ICP-MS provided with a plasma torch 61 and an analytical unit 62. The type of the plasma analyzer 6 is not particularly limited, for example, ICP-AES, MIP-MS, or MIP-AES can be used. The plasma torch 61 has a center tube 61a, and one end of the center tube 61a serves as a second carrier gas inlet 61a'. The carrier gas flowing out from the second carrier gas outlet 52b of the gas replacement device 5 is introduced together with the fine particles from the second carrier gas inlet 61a' into the plasma analyzer 6. The gas including the fine particles introduced from the center tube 61a is converted into plasma P by a high-frequency coil or the like, which is not shown in the drawings, for analysis of constituent elements of the fine particles, and mass spectrometry of the constituent elements is performed in the analytical unit 62. Furthermore, plasma gas for generating plasma P can be introduced in the plasma torch 61 from a gas introducing port 61', and it is preferred that the plasma gas is the same as the second gas.

The gas addition device 7 adds carrier gas between the gas replacement device 5 and the plasma analyzer 6. To be more precise, the gas addition device 7 has a first duct 71, a second duct 72 connected to the first duct 71, a flow rate controller 73 such as a mass flow rate controller (MFC) or a flow rate control valve, a third gas supply source 74, and a pressure adjusting unit 75.

One end opening 71' of the first duct 71 is connected to the second carrier gas inlet 61a' of the plasma analyzer 6. A throttle 71a and a diffuser 71b connected to the outlet of the throttle 71a are formed inside the first duct 71. The other end opening 71" of the first duct 71 is connected to the third gas supply source 74 via the flow rate controller 73. One end 72' of the second duct 72 is communicated with the second carrier gas outlet 52b of the gas replacement device 5 via a first pipe 75a of the pressure adjusting unit 75, and the other end 72" of the second duct 72 is communicated with an ejection region of the carrier gas in the vicinity of the outlet of the throttle 71a.

In the present embodiment, the third gas supply source 74 supplies pressurized argon gas as the carrier gas and is constituted by, for example, a gas cylinder. The carrier gas flowing out from the second carrier gas outlet 52b of the gas replacement device 5 is sucked into the first duct 71 due to a pressure head drop caused by ejection of the argon gas, which is supplied from the third gas supply source 74, from the throttle 71a. Thus, the gas addition device 7 constitutes an aspirator. As a result, the carrier gas supplied from the third gas supply source 74 is added to the carrier gas flowing out from the second carrier gas outlet 52b, and the flow rate of this addition is varied by the flow rate controller 73.

The pressure adjusting unit 75 has a first pipe 75a, a second pipe 75b, a connection pipe 75c connecting the first pipe 75a with the second pipe 75b, a seal gas supply source 75d, and a flow rate controller 75e such as a mass flow rate controller (MFC) or a flow rate control valve in order to regulate pressure fluctuations of the carrier gas between the gas replacement device 5 and the plasma analyzer 6. One end opening 75a' of the first pipe 75a is connected to the second carrier gas outlet 52b of the gas replacement device 5, and the other end opening of the first pipe 75a is connected to one end 72' of the second duct 72. One end opening 75b' of the second pipe 75b is connected to the seal gas supply source 75d via the flow rate controller 75e, and the other end opening 75b" of the second pipe 75b communicates with the atmosphere. In the present embodiment, the seal gas supply source 75d supplies argon gas as the seal gas and is constituted by, for example, a gas cylinder. The inside of the second pipe 75b communicates with the inside of the first pipe 75a via the connection pipe 75c. Where the pressure inside the first pipe 75a drops due to the suction of the carrier gas by the gas addition device 7 or anything, part of the seal gas introduced from the seal gas supply source 75d into the second pipe 75b is introduced into the first pipe 75a and the pressure drop is canceled.

With the above-described analytical system 1, the sample α is converted into fine particles by the laser ablation device 3 in the atmosphere of the first gas, the produced fine particles are conveyed from the laser ablation device 3 to the gas replacement device 5 by using the first gas as the carrier gas, the first gas of at least part of the carrier gas is replaced with the second gas by means of the gas replacement device 5, and then the fine particles are conveyed by the carrier gas from the gas replacement device 5 to the plasma analyzer 6, so that constitutional elements of the fine particles can be analyzed by the plasma analyzer 6. In the present embodiment, the first gas is helium gas and the second gas is argon gas, so that the atmosphere during laser ablation is helium gas with a comparatively high thermal conductivity, and therefore the produced fine particles are reduced in size, the adhesion of fine particles to the crater periphery of the sample α and the inner surface of a carrier gas flow channel is inhibited, the number of fine particles conveyed to plasma P is increased, the efficiency of the atomization and ionization in the plasma analyzer is increased, and analysis sensitivity and stability of signals from plasma P can be improved. Further, since the fine particles are introduced into plasma P by argon gas that has a comparatively low ionization voltage, it is possible to reduce power necessary for ionization to maintain plasma P and a load on the analyzer 6, increase ion density in plasma P, stabilize plasma P, and facilitate the selection of optimum measurement conditions during analysis.
Furthermore, even if a gas component that reduces the sensitivity of plasma analysis and hinders the measurements is generated during laser ablation due to constituent components of the sample α, this gas component can be removed by gas replacement performed by the gas replacement device 5.

### EXAMPLE

Analysis of constituent elements of fine particles with using the analytical system 1 of the above-described embodiment is performed as an example according to the present invention, and analysis of constituent elements of fine particles with using the conventional analytical system, in which the gas replacement device 5 is removed from the analytical system 1 of the above-described embodiment to connect the laser ablation device 3 directly with the plasma analyzer 6, is performed as a comparative example.

The UP-213 manufactured by New Wave Research Co. was used as the laser ablation device 3. A flow rate of helium introduced in the laser ablation device 3 was changed as 600 ml/min, 800 ml/min, 1000 ml/min, 1200 ml/min, 1400 ml/min, 1600 ml/min, and 1800 ml/min. The repetition frequency of laser ablation was 20 Hz, the laser energy was generated at 60% in continuous operation mode, the laser irradiation had a raster pattern, the laser beam diameter was 100 µm, and the laser warm-up time was 20 sec.
The ICP-TOFMS (OPTIMA-9500) manufactured by GBC Co. was used as the plasma analyzer 6.
The flow rate of argon gas introduced in the plasma analyzer 6 was set to a constant value of 800 ml/min.
In the gas replacement device 5, the material of the porous partition wall 52A was shirasu porous glass, the pore diameter was 0.1 µm, the porosity was 70%, the thickness was 0.7 mm, the outer diameter was 10 mm, the length was 420 mm, the material of the areas 52B, 52C close to both ends of the inner pipe 52 and the outer pipe 53 was quartz glass, and the inner diameter of the outer pipe 53 was 16 mm.
The sample α was a glass standard sample with a diameter of 30 mm and contained silver (Ag) 22 ppm, lead (Pb) 38.6 ppm, uranium (U) 37.4 ppm, and thallium (TI) 15.7 ppm.
As a preliminary separate test, comparative measurements of the amount of fine particles were conducted when a gas including fine particles was passed through the system of the embodiment and the system of the comparative example, with the result that loss of fine particles caused by adsorption in the gas replacement device 5 or anything was not found.

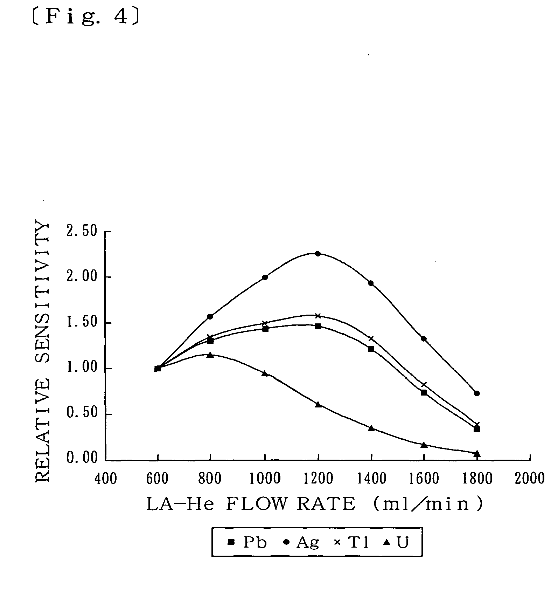

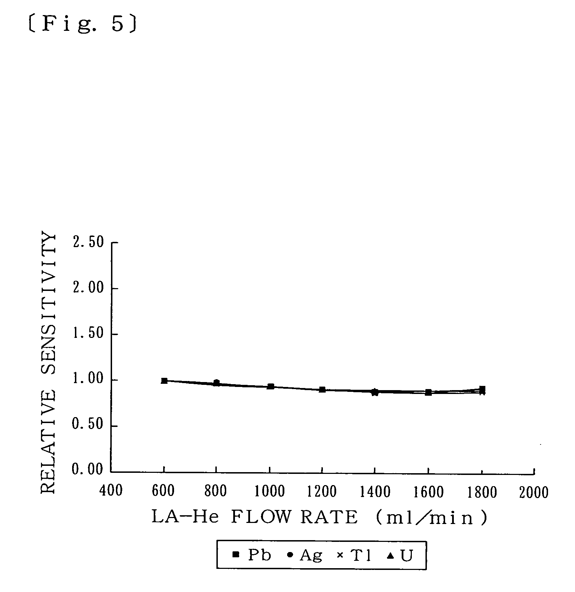

Fig. 4 shows the measurement results obtained in the comparative example, and Fig. 5 shows the measurement results obtained in the embodiment according to the present invention. In Fig. 4 and Fig. 5, the abscissa indicates the flow rate of helium gas supplied to the laser ablation device 3, and the ordinate indicates the relative sensitivity of the plasma analyzer 6. The relative sensitivity was taken as 1 in the case of a helium gas flow rate of 600 ml/min, and in the cases of 800 ml/min, 1000 ml/min, 1200 ml/min, 1400 ml/min, 1600 ml/min, and 1800 ml/min, the relative sensitivity was represented by a value obtained by dividing a signal intensity for the respective flow rate by the signal intensity for the flow rate of 600 ml/min.
Fig. 4 and Fig. 5 confirm that the relative sensitivity of constituent elements of the sample αluctuates significantly due to flow rate fluctuations of helium gas in the comparative example, whereas fluctuations of relative sensitivity are small even when the flow rate changes and optimum measurement conditions can be easily selected in the embodiment according to the present invention.

The present invention is not limited to the above-described embodiment and example. For example, the first gas can be a gas other than helium gas, and the second gas can be a gas other than argon gas.
Furthermore, the first gas and the second gas can be of mutually different kinds as in the above-described embodiment and example, or the first gas and the second gas can be of the same kind such as argon gas.
Furthermore, in the above-described example, the flow rate of the second gas introduced in the plasma analyzer was set to a constant value by the gas addition device 7, but the gas addition device 7 can be omitted provided that the flow rate of the second gas is not necessary to be adjusted.

### EXPLANATION OF REFERENCE NUMERALS

1 ... analytical system, 2... first gas supply source, 3 ... laser ablation device, 3a' ... first carrier gas outlet, 4 ... second gas supply source, 5 ... gas replacement device, 6 ... plasma analyzer, 52A ... porous partition wall (gas replacement portion), 52a ... first carrier gas inlet, 52b ... second carrier gas outlet, 53a ... second gas inlet, 61a' ... second carrier gas inlet, P ... plasma, α... sample

## Claims

1. An analytical method, comprising:
converting a sample into fine particles by a laser ablation device in an atmosphere of a first gas;
conveying said fine particles from said laser ablation device to a gas replacement device by using said first gas as a carrier gas;
replacing said first gas of at least part of said carrier gas with a second gas by means of the gas replacement device;
conveying said fine particles from said gas replacement device to a plasma analyzer by the carrier gas that has been subjected to the gas replacement; and
analyzing constituent elements of said fine particles by said plasma analyzer.

2. The analytical method according to claim 1, wherein said first gas is helium gas and said second gas is argon gas.

3. An analytical system, comprising:
a first gas supply source that supplies a first gas;
a laser ablation device that converts a sample into fine particles by laser ablation in an atmosphere of said first gas supplied from said first gas supply source;
said laser ablation device having a first carrier gas outlet through which said first gas as a carrier gas flows out together with said fine particles;
a second gas supply source that supplies a second gas;
a gas replacement device having a first carrier gas inlet for introducing said first gas that flows out from said first carrier gas outlet together with said fine particles, a second gas inlet for introducing said second gas supplied from said second gas supply source, a gas replacement portion that replaces said first gas of at least part of said carrier gas with said second gas, and a second carrier gas outlet through which said carrier gas that has been subjected to the gas replacement flows out together with said fine particles; and
a plasma analyzer having a second carrier gas inlet for introducing said carrier gas that flows out from said second carrier gas outlet together with said fine particles, and generating plasma for analyzing constituent elements of said fine particles introduced together with said carrier gas.

4. The analytical system according to claim 3, wherein helium gas is supplied as said first gas by said first gas supply source, and argon gas is supplied as said second gas by said second gas supply source.
